(19) Europäisches Patentamt
European Patent Office
Office européen des brevets

(11) EP 3 680 267 B1

(12) EUROPEAN PATENT SPECIFICATION

(45) Date of publication and mention of the grant of the patent:
**24.07.2024 Bulletin 2024/30**

(21) Application number: **18853807.8**

(22) Date of filing: **31.08.2018**

(51) International Patent Classification (IPC):
***C08F 283/00*** (2006.01) ***B32B 27/30*** (2006.01)
***B32B 27/36*** (2006.01) ***C08G 63/91*** (2006.01)
***C08L 101/16*** (2006.01) ***B32B 27/08*** (2006.01)
***C09J 151/08*** (2006.01)

(52) Cooperative Patent Classification (CPC):
(C-Sets available)
**C09J 151/08; B32B 7/12; B32B 27/08; B32B 27/18; B32B 27/20; B32B 27/22; B32B 27/30; B32B 27/306; B32B 27/36; C08F 283/00; C08F 283/006; C08G 63/91;**
B32B 2250/02; B32B 2250/24; B32B 2307/412;

(Cont.)

(86) International application number:
**PCT/JP2018/032476**

(87) International publication number:
**WO 2019/049798 (14.03.2019 Gazette 2019/11)**

# (54) BIODEGRADABLE ACID-MODIFIED POLYESTER RESIN AND LAMINATE

BIOLOGISCH ABBAUBARES SÄUREMODIFIZIERTES POLYESTERHARZ UND LAMINAT

RÉSINE POLYESTER BIODÉGRADABLE MODIFIÉE PAR UN ACIDE ET STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2017 JP 2017172065**

(43) Date of publication of application:
**15.07.2020 Bulletin 2020/29**

(73) Proprietor: **Mitsubishi Chemical Corporation**
**Tokyo 100-8251 (JP)**

(72) Inventors:
- **MISAWA, Hiroto**
**Chiyoda-ku,**
**Tokyo 1008251 (JP)**
- **KUROKAWA, Noriaki**
**Chiyoda-ku,**
**Tokyo 1008251 (JP)**
- **TANIGUCHI, Masahiko**
**Chiyoda-ku,**
**Tokyo 1008251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:

| | |
|---|---|
| EP-A1- 2 781 351 | EP-A2- 0 263 499 |
| JP-A- 2003 089 746 | JP-A- 2008 155 433 |
| JP-A- 2013 212 682 | JP-A- 2014 098 111 |
| JP-A- H0 841 140 | JP-A- S63 223 039 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/7163; B32B 2307/7242;
B32B 2307/732; B32B 2307/736; B32B 2439/70;
C08L 101/16; C08L 2201/06

C-Sets
**C08F 283/006, C08F 222/06**

**Description**

TECHNICAL FIELD

The present invention relates to a biodegradable acid-modified polyester resin, and more specifically relates to a biodegradable acid-modified polyester resin preferably used for an adhesive layer between a polyvinyl alcohol resin layer (hereinafter, polyvinyl alcohol is referred to as "PVA") and a biodegradable resin layer such as polylactic acid. In addition, the present invention relates to a laminate including a layer containing the biodegradable acid-modified polyester resin.

BACKGROUND ART

Plastics are excellent in moldability, strength, water resistance, transparency, and the like, and therefore are widely used as packaging materials. Examples of the plastics to be used as packaging materials include polyolefin resins such as polyethylene and polypropylene; vinyl resins such as polystyrene and polyvinyl chloride; and aromatic polyester resins such as polyethylene terephthalate. However, these plastics have low biodegradability, and therefore, when they are dumped in nature after use, they remain for a long period of time and therefore may spoil the landscape or cause environmental disruption in some cases.

On the other hand, recently, a biodegradable resin, which is biodegraded or hydrolyzed in soil or water, and therefore is useful for the prevention of environmental pollution, has drawn attention, and the practical application thereof has been studied. As such a biodegradable resin, an aliphatic polyester resin, cellulose acetate, modified starch, and the like are known. As a packaging material, polylactic acid, a polycondensate of adipic acid/terephthalic acid/1,4-butanediol, a polycondensate of succinic acid/1,4-butanediol/lactic acid, and the like are used because of being excellent in transparency, heat resistance and strength.

However, an aliphatic polyester resin such as polylactic acid has insufficient oxygen gas barrier properties, and therefore cannot be used alone as a packaging material for a content which may be oxidatively degraded such as a food or a drug.

Therefore, a laminate having a coating layer formed from PVA having excellent gas barrier properties and also having biodegradability on at least one surface of a polylactic acid film has been proposed (see, for example, Patent Document 1).

In addition, as a biodegradable laminate capable of being coextrusion-laminated and further being subjected to a heat-stretching treatment by using a melt-moldable PVA resin, a biodegradable laminate, in which both surfaces of a gas barrier layer containing a PVA resin having a 1,2-diol structure in its side chain as a main component are sandwiched by aliphatic polyester layers whose melting point is different from that of the gas barrier layer by 20°C or lower, has been proposed (see, for example, Patent Document 2).

However, since the surface properties of a polylactic acid resin layer are largely different from those of a polyvinyl alcohol resin layer, the adhesiveness between these layers is poor, and therefore, it is difficult to obtain practically usable interlayer adhesion strength by directly laminating these layers. For example, Patent Document 1 proposes a surface activation treatment to be applied to a polylactic acid film such as a corona discharge treatment, a flame treatment, or an ozone treatment, or an anchor coating treatment, however, there is still a lot of room for improvement.

Further, in Patent Document 2, the interlayer adhesiveness between the polylactic acid resin layer and the PVA resin layer is slightly improved by coextrusion-lamination, but is not enough for practical application.

Therefore, in order to obtain good interlayer adhesiveness between the polylactic acid resin layer and the PVA resin layer, it is necessary to provide an adhesive layer between the two layers. Further, in order to make use of the biodegradability of the polylactic acid resin and the PVA resin, the adhesive layer used for the laminate including these layers is also required to be biodegradable.

In view of the above, a polyester resin having a polar group obtained by graft polymerization of an $\alpha,\beta$-unsaturated carboxylic acid or an anhydride thereof to a biodegradable polyester resin has been proposed as the adhesive layer (see, for example, Patent Document 3). Moreover, the Patent Documents 4 and 5 disclose biodegradable polymers and Patent Document 6 discloses grafted alkyd resins according to prior art.

CITATION LIST

PATENT LITERATURE

Patent Document 1: JP 2000-177072 A

Patent Document 2: JP 2009-196287 A
Patent Document 3: JP 2013-212682 A
Patent Document 4: EP 2781351 A1
Patent Document 5: JP 2014-098111 A
Patent Document 6: EP 0263499 A2

## SUMMARY OF INVENTION

## TECHNICAL PROBLEM

However, in the technique of Patent Document 3 described above, there is a problem that an appearance defect is caused due to a rough interface with the adhesive layer when producing a laminate by a feed block multilayer extruder.

Therefore, under the above circumstances, an object of the present invention is to provide a biodegradable acid-modified polyester resin, in which a laminate having high transparency at an adhesive layer interface, and excellent in both appearance and adhesiveness can be obtained, in a case of being used in a laminate including a PVA resin layer and a biodegradable resin layer, as an adhesive layer between the two layers.

## SOLUTION TO PROBLEM

Accordingly, the present inventors made intensive studies, and as a result, they found that the object of the present invention is achieved by using a biodegradable acid-modified polyester resin having an acid value smaller than that in the related art as an acid-modified polyester resin.

That is, the present invention relates to the following <1> to <5>.

<1> A biodegradable acid-modified polyester resin, having an acid value of 2.0 mg·KOH/g to 6.5 mg·KOH/g and comprising at least one structural unit selected from the structural units represented by the following general formulae (1) to (3):

[Chem. 1]

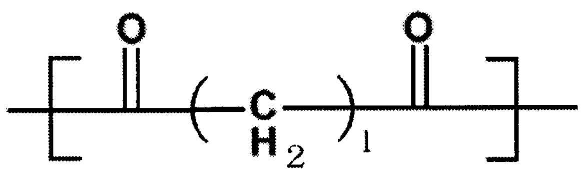

(1)

(In the formula (1), l is an integer of 2 to 6.)

[Chem. 2]

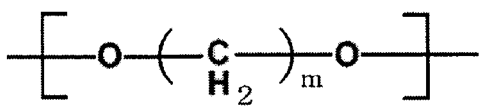

(2)

(In the formula (2), m is an integer of 2 to 6.)

[Chem. 3]

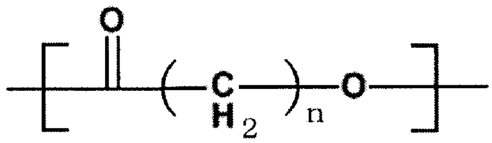

(3)

(In the formula (3), n is an integer of 2 to 6.), and wherein the biodegradable acid-modified polyester resin satisfies the conditions for biodegradability as defined in ISO 14851:1999.

<2> The biodegradable acid-modified polyester resin according to item <1>, wherein the biodegradable acid-modified polyester resin is formed by graft polymerization of an α,β-unsaturated carboxylic acid or an anhydride thereof to a biodegradable polyester resin.
<3> The biodegradable acid-modified polyester resin according to item <1>, comprising at least one structural unit selected from the structural units represented by the above general formulae (1) to (3) in a total amount of 50% by mole or more.
<4> A laminate comprising at least one layer containing the biodegradable acid-modified polyester resin according to any one of items <1> to <3>.
<5> A laminate comprising: a polyvinyl alcohol resin (B) layer; a biodegradable resin (C) layer; and an adhesive layer between the above two layers,

wherein the adhesive layer contains the biodegradable acid-modified polyester resin according to any one of items <1> to <3>.

ADVANTAGEOUS EFFECTS OF INVENTION

When the biodegradable acid-modified polyester resin of the present invention is used in, for example, the laminate including the PVA resin layer and the biodegradable resin layer as the adhesive layer between the two layers, a laminate having high transparency at the adhesive layer interface, and excellent in both appearance and adhesiveness can be obtained.

DESCRIPTION OF EMBODIMENTS

Hereinafter, the constitution of the present invention will be described in detail, but the following description shows only examples of preferred embodiments. In the present description, "mass" has the same meaning as "weight".
In the present description, "biodegradability" means that the conditions defined in JIS K 6950:2000 (ISO 14851:1999) are satisfied.

[Biodegradable Acid-modified Polyester Resin (A)]

The biodegradable acid-modified polyester resin (A) of the present invention has an acid value of 2.0 mg·KOH/g to 6.5 mg·KOH/g.
When the acid value of the biodegradable acid-modified polyester resin (A) of the present invention is less than 2.0 mg·KOH/g, the attractive force between the polyester resin (A) and another resin is reduced due to the decrease of the amount of polar groups in the polyester resin (A), and the adhesiveness between the polyester resin (A) and the another resin tends to decrease.
When the acid value of the biodegradable acid-modified polyester resin (A) of the present invention is more than 6.5 mg·KOH/g, degradation of the polyester resin by the acid component tends to proceed.
When the decomposition of the biodegradable acid-modified polyester resin (A) of the present invention occurs, viscosity spots due to the decomposition occur, and it is difficult to obtain a uniform layer. As a result, a poor appearance of a laminate having a layer containing the polyester resin (A) occurs. Therefore, it is presumed that the effect of the present invention can be obtained by adjusting the acid value and preventing the decomposition of the polyester resin (A).
From the viewpoint of the appearance and adhesiveness of the laminate, the acid value is preferably 2.5 mg·KOH/g to 6.0 mg·KOH/g, more preferably 3.0 mg·KOH/g to 5.5 mg·KOH/g, and still more preferably 3.5 mg·KOH/g to 5.0 mg·KOH/g.
A method for measuring the acid value will be described in detail below. First, the biodegradable acid-modified

polyester resin (A) to be measured is thoroughly washed with a solvent. The washing is performed in order to wash away impurities, mainly an unreacted α,β-unsaturated carboxylic acid or an anhydride thereof in the biodegradable acid-modified polyester resin (A).

As such a solvent, it is necessary to use a solvent in which the biodegradable acid-modified polyester resin (A) does not dissolve, and examples thereof include water, acetone, methanol, ethanol, and isopropanol.

Next, 100 ml of tetrahydrofuran is charged to a test bottle as a solvent, and 5 g of the biodegradable acid-modified polyester resin (A) is charged to the test bottle while being stirred with a hot stirrer (set temperature 75°C, stirrer rotation speed 750 rpm). The stirring lasts for 5 to 6 hours until the biodegradable acid-modified polyester resin (A) is dissolved. After dissolution, 4 ml of ultrapure water is added and the stirring is performed for another 10 minutes to prepare a test solution. The test solution is titrated with a potassium hydroxide aqueous solution (N/10) by the following automatic titrator, and the acid value is obtained by the following formula.

[Equation 1]

$$\text{ACID VALUE } AV(\text{mg} \cdot \text{KOH/g}) = \frac{(A - B) \times f \times 5.61}{S}$$

A = Amount (ml) of potassium hydroxide aqueous solution (N/10) required for neutralization of biodegradable acid-modified polyester resin (A)
B = Amount (ml) of potassium hydroxide aqueous solution (N/10) required for blank test
f = factor of potassium hydroxide aqueous solution (N/10)
S = sample size (g) of biodegradable acid-modified polyester resin (A)

Titrator:Titration measuring apparatus: Automatic potentiometric titrator AT-610 manufactured by KYOTO ELECTRONICS MANUFACTURING CO., LTD. Reference electrode: Composite glass electrode C-171

Titration solution: potassium hydroxide aqueous solution (N/10) manufactured by Kishida Chemical Co. Ltd.

In order to make the acid value within a specific range, the following method is mentioned, for example.

(i) A method of adjusting the amount of a radical initiator while a graft polymerization of an α,β-unsaturated carboxylic acid or an anhydride thereof to the biodegradable acid-modified polyester resin (A).
(ii) A method of drying the biodegradable acid-modified polyester resin (A) to lower a water absorption rate.

Among these, the method of (i) is preferred from the viewpoint of easy control of the acid value.

The biodegradable acid-modified polyester resin (A) of the present invention includes at least one structural unit selected from the structural units represented by the following general formulae (1) to (3).

[Chem. 4]

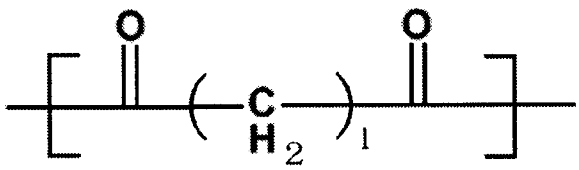

(1)

[In the formula, l is an integer of 2 to 6, and preferably an integer of 3 to 5.]

[Chem. 5]

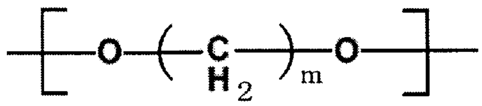

(2)

[In the formula, m is an integer of 2 to 6, and preferably an integer of 3 to 5.]

[Chem. 6]

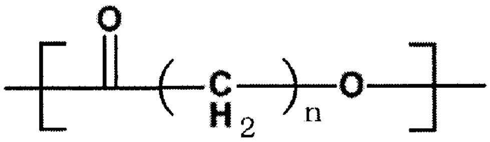

(3)

[In the formula, n is an integer of 2 to 6, and preferably an integer of 3 to 5.]

From the viewpoint of easily obtaining the biodegradability, the biodegradable acid-modified polyester resin (A) of the present invention is composed of at least one structural unit selected from the structural units represented by the above general formulae (1) to (3). However, other structural units may be included from the viewpoint of controlling heat resistance, strength, biodegradability, and the like.

The total content of the at least one structural unit selected from the structural units represented by the above general formulae (1) to (3) is generally 50% by mole or more, preferably 70% by mole or more, and more preferably 90% by mole or more.

In a case of including at least one structural unit selected from the structural units represented by the above general formulae (1) to (3), the biodegradable acid-modified polyester resin (A) of the present invention is obtained by subjecting at least one selected from the group consisting of an aliphatic dicarboxylic acid, an aliphatic diol compound and other components to polycondensation by a known method and further to acid modification.

Examples of the aliphatic dicarboxylic acid include succinic acid, glutaric acid, adipic acid, 1,5-pentanedicarboxylic acid, and 1,6-hexanedicarboxylic acid, and adipic acid is particularly preferred from the viewpoint of moldability and flexibility.

Examples of the aliphatic diol compound include ethylene glycol, propylene glycol, 1,4-butanediol, 1,5-pentanediol, and 1,6-hexanediol, and 1,4-butanediol is particularly preferred from the viewpoint of moldability and flexibility.

In addition, specific examples of the other component include: hydroxy acids such as 4-hydroxybutyric acid, 5-hydroxyvaleric acid, and 6-hydroxyhexanoic acid; those derived from aromatic dicarboxylic acids such as terephthalic acid and isophthalic acid; those derived from dicarboxylic acids having less than two alkylene chains such as oxalic acid and malonic acid; those derived from hydroxycarboxylic acids having less than two alkylene chains such as glycolic acid and lactic acid; and other than these, those known as a copolymerizable component of polyester resins.

The weight average molecular weight of the biodegradable acid-modified polyester resin (A) of the present invention is generally 5,000 to 50,000, preferably 5,500 to 40,000, and particularly preferably 6,000 to 30,000. When the weight average molecular weight is too high, the melt viscosity is increased, and thus, it tends to be difficult to melt-mold the polyester resin (A). On the other hand, when the weight average molecular weight is too low, the resulting molded body tends to be brittle.

The above weight average molecular weight is a weight average molecular weight in terms of a standard polystyrene molecular weight, and is measured by using two columns in series: TSKgel SuperMultipore HZ-M (exclusion limit molecular weight: 2 × 106, theoretical plate number: 16,000 plates per column, filler material: styrene-divinylbenzene copolymer, filler particle diameter: 4 μm) for high performance liquid chromatography ("HLC-8320GPC" manufactured by Tosoh Corporation).

As a biodegradable acid-modified polyester resin (A) of the present invention, the biodegradable acid-modified polyester resin (A) which is obtained by graft polymerization of an α,β-unsaturated carboxylic acid or an anhydride thereof (hereinafter, the α,β-unsaturated carboxylic acid or an anhydride thereof may be referred to as the "α,β-unsaturated carboxylic acids") to a biodegradable polyester resin (A') as a raw material is good in adhesiveness.

Specific examples of the α,β-unsaturated carboxylic acids include: α,β-unsaturated monocarboxylic acids such as acrylic acid and methacrylic acid; and α,β-unsaturated dicarboxylic acids or an anhydride thereof such as maleic acid, fumaric acid, itaconic acid, citrus acid, tetrahydrophthalic acid, crotonic acid, and isocrotonic acid, and preferably,

an anhydride of an α,β-unsaturated dicarboxylic acid is used.

The present invention is not limited to the case where one type of these α,β-unsaturated carboxylic acids is used alone, and two or more types thereof may be used in combination.

The method for graft polymerization of an α,β-unsaturated carboxylic acid on the biodegradable polyester resin (A') as a raw material is not particularly limited, and a known method can be used. The graft polymerization can be carried out only by a thermal reaction, however, in order to increase the reactivity, it is preferred to use a radical initiator. Further, as a method for carrying out the reaction, a solution reaction, a reaction in a suspension state, a reaction in a molten state (melting method) without using a solvent or the like, can be adopted, however, among these, the reaction is preferably carried out by a melting method.

Examples of a commercially available product of the biodegradable polyester resin (A') as a raw material include "Ecoflex" manufactured by BASF Corporation containing a polycondensate of adipic acid/terephthalic acid/ 1,4-butanediol as a main component, and "GS-PLA" manufactured by Mitsubishi Chemical Corporation containing a polycondensate of succinic acid/1,4-butanediol/lactic acid as a main component.

Hereinafter, the melting method will be described in detail.

As the melting method, a method in which the biodegradable polyester resin (A') as a raw material, an α,β-unsaturated carboxylic acid, and a radical initiator are mixed in advance, and then, the resulting mixture is melt-kneaded in a kneader to carry out the reaction; a method in which an α,β-unsaturated carboxylic acid and a radical initiator are blended in the biodegradable polyester resin (A') in a molten state in a kneader; or the like can be used.

As a mixer to be used when mixing the raw materials in advance, a Henschel mixer, a ribbon blender, or the like is used, and as a kneader to be used for the melt-kneading, a single- or twin-screw extruder, a roll, a Banbury mixer, a kneader, a Brabender mixer, or the like can be used.

The temperature during the melt-kneading may be appropriately set to a temperature equal to or higher than the melting point of the biodegradable polyester resin (A') as a raw material within a temperature range in which thermal degradation is not caused. The melt-mixing is carried out at preferably 100°C to 250°C, and more preferably 160°C to 220°C.

The blend amount of the α,β-unsaturated carboxylic acid is generally in the range from 0.0001 to 5 parts by weight with respect to 100 parts by weight of the biodegradable polyester resin (A') as a raw material, and particularly a range from 0.001 to 1 part by weight, more particularly a range from 0.02 to 0.45 part by weight is preferably used. When the blend amount thereof is too small, a sufficient amount of the polar group is not introduced into the biodegradable polyester resin (A'), and therefore, the interlayer adhesiveness, particularly the adhesion strength to the PVA resin layer tends to be insufficient. Further, when the blended amount thereof is too large, the α,β-unsaturated carboxylic acid which is not graft-polymerized sometimes remains in the resin, and therefore, poor appearance or the like due to the remaining α,β-unsaturated carboxylic acid tends to occur.

The radical initiator is not particularly limited, and a known radical initiator can be used, however, examples thereof include organic and inorganic peroxides such as t-butyl hydroperoxide, cumene hydroperoxide, 2,5-dimethylhexane-2,5-dihydroperoxide, 2,5-dimethyl-2,5-bis(t-butyloxy)hexane, 3,5,5-trimethylhexanoyl peroxide, t-butyl peroxybenzoate, benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, and hydrogen peroxide; azo compounds, such as 2,2'-azobisisobutyronitrile, 2,2'-azobis(isobutylamide) dihalides, 2,2'-azobis[2-methyl-N-(2-hydroxyethyl)propionamide], and azodi-t-butane; and carbon radical generators such as dicumyl.

These may be used alone or can be used in combination of two or more thereof.

The blend amount of the radical initiator is generally in the range from 0.00001 to 0.5 part by weight with respect to 100 parts by weight of the biodegradable polyester resin (A') as a raw material, and particularly a range from 0.0001 to 0.1 part by weight, more particularly a range from 0.002 to 0.05 part by weight is preferably used.

When the blended amount of the radical initiator is too small, the graft polymerization is not sufficiently carried out, and therefore, the effect of the present invention is sometimes not obtained, and when the blended amount thereof is too large, the molecular weight of the biodegradable polyester resin is decreased due to the degradation of the resin, and therefore, the adhesion strength tends to be insufficient due to low aggregability.

[PVA Resin (B) Layer]

The PVA resin (B) layer is preferably used for a gas barrier layer of the below-described laminate of the present invention, and particularly preferably has the gas barrier property of the laminate of the present invention.

The PVA resin (B) layer is preferably laminated on at least one surface of a below-described biodegradable resin (C) layer via a layer (adhesive layer) containing the above biodegradable acid-modified polyester resin (A).

The PVA resin (B) layer to be used in the present invention is a layer using a PVA resin (B) as a main component, and generally contains the PVA resin (B) in an amount of 70% by weight or more, preferably 80% by weight or more, and more preferably 90% by weight or more. The upper limit is 100% by weight. When the content is too small, the gas

barrier properties tend to be insufficient.

The PVA resin (B) to be used in the present invention is a resin containing as a main structural unit, a vinyl alcohol structural unit, and obtained by saponification of a polyvinyl ester resin obtained by polymerization of a vinyl ester monomer, and is composed of a vinyl alcohol structural unit in an amount equivalent to the saponification degree and a vinyl ester structural unit.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. However, it is preferred to use vinyl acetate from the economical viewpoint.

The average polymerization degree (obtained by measurement according to JIS K 6726) of the PVA resin (B) to be used in the present invention is generally from 200 to 1,800, and particularly, a PVA resin having an average polymerization degree of 300 to 1,500, more particularly 300 to 1,000 is preferably used.

When the average polymerization degree thereof is too small, the mechanical strength of the PVA resin (B) layer tends to be insufficient. On the other hand, when the average polymerization degree is too large, the fluidity tends to be low to decrease the moldability when the PVA resin (B) layer is formed by thermal melt-molding, and further, shear heat is abnormally generated during molding, and thus, the PVA resin (B) tends to be thermally degraded in some cases.

Further, the saponification degree (obtained by measurement according to JIS K 6726) of the PVA resin (B) to be used in the present invention is generally from 80% by mole to 100% by mole, and particularly a PVA resin having a saponification degree of 90% by mole to 99.9% by mole, more particularly 98% by mole to 99.9% by mole is preferably used. When the saponification degree is too low, the gas barrier properties tend to be decreased.

Further, in the present invention, as the PVA resin (B), a PVA resin obtained by copolymerization of a variety of monomers when producing a polyvinyl ester resin, followed by saponification, or a variety of modified PVA resins having a variety of functional groups introduced into unmodified PVA by post-modification can be used.

Examples of the monomer to be used in the copolymerization with a vinyl ester monomer include olefins such as ethylene, propylene, isobutylene, $\alpha$-octene, $\alpha$-dodecene, and $\alpha$-octadecene; hydroxy group-containing $\alpha$-olefins such as 3-buten-1-ol, 4-penten-1-ol, 5-hexen-1-ol, and 3,4-dihydroxy-1-butene, and derivatives thereof such as acylated compounds thereof; unsaturated acids such as acrylic acid, methacrylic acid, crotonic acid, maleic acid, maleic anhydride, and itaconic acid, and salts thereof, monoesters thereof, and dialkyl esters thereof; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid, and salts thereof; vinyl compounds such as alkyl vinyl ethers, dimethyl allyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; substituted vinyl acetates such as isopropenyl acetate and 1-methoxyvinyl acetate; vinylidene chloride; 1,4-diacetoxy-2-butene; and vinylene carbonate.

Further, examples of the PVA resin having a functional group introduced therein by the post-modification include a resin having an acetoacetyl group introduced by a reaction with a diketene, a resin having a polyalkylene oxide group introduced by a reaction with ethylene oxide, a resin having a hydroxyalkyl group introduced by a reaction with an epoxy compound or the like, and a resin obtained by reacting an aldehyde compound having a variety of functional groups with PVA.

The content of the modified species in the modified PVA resin, that is, the structural unit derived from each type of monomer in the copolymer or the functional group introduced by the post-reaction is generally from 1% by mole to 20% by mole, and particularly, a range from 2% by mole to 10% by mole is preferably used, though it cannot be specified definitely because the properties greatly vary depending on the modified species.

Among these various types of modified PVA resins, in the present invention, a PVA resin with a structural unit having a 1,2-diol structure in its side chain (hereinafter, may be referred to as "1,2-diol structural unit") represented by the following general formula (4) is preferably used in the below-described method for producing a laminate of the present invention from the viewpoint of ease of melt-molding.

[Chem. 7]

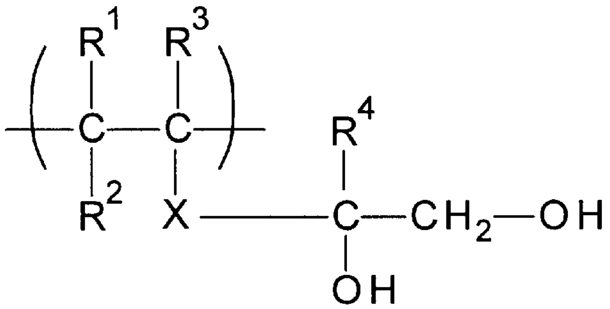

(4)

Each of $R^1$ to $R^4$ in the 1,2-diol structural unit represented by the general formula (4) independently represents a hydrogen atom or a linear or branched alkyl group having 1 to 4 carbon atoms.

Examples of the alkyl group include a methyl group, an ethyl group, an n-propyl group, an isopropyl group, an n-butyl group, an isobutyl group, and a tert-butyl group. The alkyl group may have a functional group such as a halogen group, a hydroxyl group, an ester group, a carboxylic acid group, or a sulfonic acid group as needed.

In addition, X in the 1,2-diol structural unit represented by the general formula (4) represents a single bond or a linking chain.

Examples of the linking chain include hydrocarbons (which may be substituted with a halogen such as fluorine, chlorine, bromine, or the like) such as a linear or branched alkylene group having 1 to 6 carbon atoms, a linear or branched alkenylene group having 1 to 6 carbon atoms, a linear or branched alkynylene group having 1 to 6 carbon atoms, a phenylene group, and a naphthylene group, and also include -O-, $-(CH_2O)_t-$, $-(OCH_2)_t-$, $-(CH2O)_tCH_2-$, -CO-, - COCO-, $-CO(CH_2)_tCO-$, $-CO(C_6H_4)CO-$, -S-, -CS-, -SO-, $-SO_2-$, -NR-, -CONR-, -NRCO-, - CSNR-, -NRCS-, -NRNR-, $-HPO_4-$, $-Si(OR)_2-$, $-OSi(OR)_2-$, $-OSi(OR)_2O-$, $-Ti(OR)_2-$, - $OTi(OR)_2-$, $-OTi(OR)_2O-$, -Al(OR)-, -OAl(OR)-, and -OAl(OR)O- (wherein each R is independently any substituent, and is preferably a hydrogen atom or a linear or branched alkyl group having 1 to 6 carbon atoms, and t represents an integer of 1 to 5).

Among these, from the viewpoint of stability during production or use, a linear or branched alkylene group having 1 to 6 carbon atoms, particularly a methylene group, or - $CH_2OCH_2$- is preferred.

X is most preferably a single bond from the viewpoint of thermal stability and stability under high temperature or acidic conditions.

Among the 1,2-diol structural units represented by the general formula (4), a structural unit represented by the following general formula (4') in which $R^1$ to $R^4$ are all hydrogen atoms and X is a single bond is most preferred.

[Chem. 8]

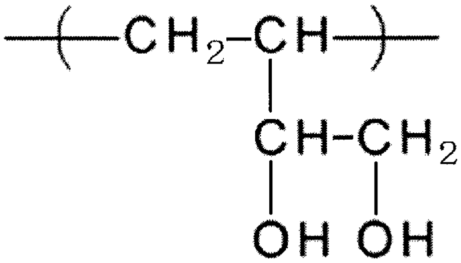

(4')

Examples of a method for producing the PVA resin having a 1,2-diol structural unit in its side chain include a method described in paragraphs [0026] to [0034] of JP-A-2015-143356.

The content of the 1,2-diol structural unit contained in the PVA resin having a 1,2-diol structural unit in its side chain is generally 1% by mole to 20% by mole, and further, a PVA resin having a 1,2-diol structural unit content of 2% by mole to 10% by mole, particularly 3% by mole to 8% by mole is preferably used. When the content thereof is too small, it is difficult to obtain the effect of the 1,2-diol structure in the side chain. On the other hand, when the content thereof is too large, the gas barrier properties at high humidity tend to be significantly deteriorated.

The content of the 1,2-diol structural unit in the PVA resin can be determined from a $^1H$-NMR spectrum (solvent: DMSO-$d_6$, internal standard: tetramethylsilane) of a completely saponified PVA resin. The content thereof may be

calculated based on the peak areas derived from a hydroxy proton, a methine proton, and a methylene proton in the 1,2-diol structural unit, a methylene proton in the main chain, a proton of a hydroxy group linked to the main chain, and the like.

Further, the PVA resin (B) to be used in the present invention may be composed of one type of resin, or may be a mixture of two or more types of resins. In the case where the PVA resin (B) is a mixture of two or more types of resins, a combination of the above-described unmodified PVA resins; an unmodified PVA resin with a PVA resin having a structural unit represented by the general formula (4); PVA resins each having a structural unit represented by the general formula (4) but having different saponification degrees, polymerization degrees, modification degrees, or the like; an unmodified PVA resin or a PVA resin having a structural unit represented by the general formula (4) with another modified PVA resin, and the like can be used.

Further, in the PVA resin (B) layer to be used in the present invention, a heat stabilizing agent, an antioxidant, a UV absorbent, a crystal nucleating agent, an antistatic agent, a flame retardant, a plasticizer, a lubricant, a filler, a lubricant, or the like may be blended, other than the above PVA resin (B).

[Biodegradable Resin (C) Layer]

Next, the biodegradable resin (C) layer preferably used for an outer layer of the below-described laminate of the present invention will be described. The biodegradable resin (C) layer to be used in the present invention is a layer using a biodegradable resin (C) as a main component, and generally contains the biodegradable resin (C) in an amount of 70% by weight or more, preferably 80% by weight or more, and more preferably 90% by weight or more. The upper limit is 100% by weight.

Examples of the biodegradable resin (C) include: aliphatic polyesters such as polylactic acid (C1), a polycondensate of adipic acid/terephthalic acid/1,4-butanediol (polybutylene adipate terephthalate (C2)), a polycondensate of succinic acid/1,4-butanediol/lactic acid, and polyglycolic acid; modified starch; casein plastics; and cellulose. These can be used alone or can be used in combination of two or more thereof.

Among these, polylactic acid (C1) and polybutylene adipate terephthalate (C2) are preferred from the viewpoint of strength. Furthermore, a mixture (C3) of polylactic acid (C1) and polybutylene adipate terephthalate (C2) is preferred from the viewpoint of adhesiveness and strength.

The polylactic acid (C1) is an aliphatic polyester resin containing a lactic acid structural unit as a main component, and is a polymer obtained by using L-lactic acid, D-lactic acid, or a cyclic dimer thereof, namely, L-lactide, D-lactide, or DL-lactide as a raw material.

The polylactic acid (C1) to be used in the present invention is preferably a homopolymer of any of these lactic acids, however, a copolymer component other than the lactic acids may be contained therein as long as the amount thereof does not impair the properties, for example, the amount thereof is 10% by mole or less.

Examples of the copolymer component include: aliphatic hydroxycarboxylic acids such as glycolic acid, 3-hydroxybutyric acid, 4-hydroxybutyric acid, 3-hydroxyvaleric acid, 4-hydroxyvaleric acid, and 6-hydroxycaproic acid; lactones such as caprolactone; aliphatic diols such as ethylene glycol, diethylene glycol, triethylene glycol, polyethylene glycol, propylene glycol, and 1,4-butanediol; and aliphatic dibasic acids such as succinic acid, oxalic acid, malonic acid, glutaric acid and adipic acid.

Further, the content ratio (weight of L-lactic acid component / weight of D-lactic acid component) of the L-lactic acid component to the D-lactic acid component in the polylactic acid (C1) is generally 95/5 or more, and particularly, polylactic acid having a content ratio of 99/1 or more, more particularly 99.8/0.2 is preferably used. As the value of the content ratio is increased, the melting point of the polylactic acid is increased to improve the heat resistance. On the other hand, as the value of the content ratio is decreased, the melting point of the polylactic acid is decreased, and therefore the heat resistance tends to be insufficient.

Specifically, in the case of a homopolymer of polylactic acid (C1), the homopolymer has a melting point of 152°C when the content ratio is 95/5, 171°C when the content ratio is 99/1, and 175°C or higher when the content ratio is 99.8/0.2.

Further, the weight average molecular weight of the polylactic acid (C1) to be used in the present invention is generally from 20,000 to 1,000,000, particularly from 30,000 to 300,000, and more particularly from 40,000 to 200,000. When the weight average molecular weight thereof is too large, the melt viscosity during thermal melt-molding is too high, and therefore, it tends to be difficult to perform favorable film formation. On the other hand, when the weight average molecular weight thereof is too small, the mechanical strength of the resulting laminate tends to be insufficient.

The weight average molecular weight can be measured, using tetrahydrofuran as an eluent and a column (polystyrene gel) heated to 40°C, by size exclusion chromatography (GPC, gel permeation chromatography) as a polystyrene equivalent amount in accordance with the ISO 16014-1 standard and the ISO 16014-3 standard.

Examples of a commercially available product of the polylactic acid (C1) include "Ingeo" manufactured by NatureWorks LLC, "Lacea" manufactured by Mitsui Chemicals, Incorporated,"REVODE" manufactured by Zhejiang

Hisun Biomaterials Co., Ltd., and "VYLOECOL" manufactured by TOYOBO Co., Ltd.

The polybutylene adipate terephthalate (C2) is obtained by condensation polymerization of adipic acid, terephthalic acid and 1,4-butanediol.

The content of adipic acid in the polybutylene adipate terephthalate (C2) is generally 10% by mole to 50% by mole, and preferably 15% by mole to 40% by mole.

The content of terephthalic acid in the polybutylene adipate terephthalate (C2) is generally 5% by mole to 45% by mole, and preferably 8% by mole to 35% by mole.

The content of 1,4-butanediol in the polybutylene adipate terephthalate (C2) is generally 5% by mole to 45% by mole, and preferably 10% by mole to 30% by mole.

When the content of each component is too large or too small, the workability and corrosion resistance tend to decrease.

The weight average molecular weight of the polybutylene adipate terephthalate (C2) is 3,000 to 1,000,000, preferably 20,000 to 600,000, and more preferably 50,000 to 400,000.

The weight average molecular weight can be measured, using tetrahydrofuran as an eluent and a column (polystyrene gel) heated to 40°C, by size exclusion chromatography (GPC, gel permeation chromatography) as a polystyrene equivalent amount in accordance with the ISO 16014-1 standard and the ISO 16014-3 standard.

When the weight average molecular weight is too small, the production becomes difficult, and when the weight average molecular weight is too large, the melt viscosity tends to increase and the moldability tends to decrease.

The polybutylene adipate terephthalate (C2) may contain other copolymer components in addition to adipic acid, terephthalic acid and 1,4-butanediol.

Examples of the other copolymer components include: dihydroxy compounds such as diethylene glycol, triethylene glycol, polyethylene glycol, polypropylene glycol and polytetrahydrofuran (poly-THF); glycolic acid, D-lactic acid, L-lactic acid, D, L-lactic acid, 6-hydroxyhexanoic acid, and cyclic derivatives thereof such as glycolide (1,4-dioxane-2,5-dione), D-dilactide, and L-dilactide (3,6-dimethyl-1,4-dioxane-2,5-dione); and hydroxycarboxylic acids such as p-hydroxybenzoic acid and oligomers and polymers of p-hydroxybenzoic acid.

The content of the other copolymerization components is about 0.1% by mole to 30% by mole of the whole polybutylene adipate terephthalate (C2).

In addition, the mixture (C3) of the polylactic acid (C1) and the polybutylene adipate terephthalate (C2) can also be used.

As a mixing ratio, polylactic acid/polybutylene adipate terephthalate (weight ratio) is 10/90 to 90/10, and preferably 20/80 to 60/40.

Further, in the biodegradable resin (C) layer to be used in the present invention, a heat stabilizing agent, an antioxidant, a UV absorbent, a crystal nucleating agent, an antistatic agent, a flame retardant, a plasticizer, a lubricant, a filler, a lubricant, or the like may be blended, other than the above biodegradable resin (C).

[Laminate]

The laminate of the present invention includes at least one layer containing the biodegradable acid-modified polyester resin (A) (hereinafter, may be referred to as "biodegradable acid-modified polyester resin (A) layer") of the present invention.

The biodegradable acid-modified polyester resin (A) layer to be used in the present invention is a layer using a the biodegradable acid-modified polyester resin (A) as a main component, and generally contains the biodegradable acid-modified polyester resin (A) in an amount of 70% by weight or more, preferably 80% by weight or more, and more preferably 90% by weight or more. The upper limit is 100% by weight.

In the biodegradable acid-modified polyester resin (A) layer to be used in the present invention, a heat stabilizing agent, an antioxidant, a UV absorbent, a crystal nucleating agent, an antistatic agent, a flame retardant, a plasticizer, a lubricant, a filler-lubricant, a crystal nucleating agent, or the like may be contained, other than the above biodegradable acid-modified polyester resin (A).

The laminate of the present invention preferably includes the biodegradable resin (C) layer as a layer other than the biodegradable acid-modified polyester resin (A) layer.

Among these, the laminate of the present invention preferably uses the PVA resin (B) layer as a gas barrier layer and the biodegradable resin (C) layer as an outer layer.

In addition, the laminate of the present invention is a laminate in which an adhesive layer is provided between the PVA resin (B) layer and the biodegradable resin (C) layer. The adhesive layer preferably contains the biodegradable acid-modified polyester resin (A) of the present invention, and generally has a layer structure of 3 to 15 layers, preferably 3 to 7 layers, and particularly preferably 5 to 7 layers.

The configuration of the laminate of the present invention is not particularly limited. When the biodegradable resin (C) layer is c, the PVA resin (B) layer is b, and the biodegradable acid-modified polyester resin (A) layer (adhesive

layer) is a, any combination of c/a/b, c/a/b/a/c, or c/b/a/b/a/b/c is possible. In a case where a plurality of biodegradable resin (C) layers are present in the laminate, the plurality of biodegradable resin (C) layers may be the same or different. The same applies to a case where a plurality of PVA resin (B) layers are present in the laminate and a case where a plurality of biodegradable acid-modified polyester resin (A) layers are present in the laminate.

Generally, in order to prevent deterioration of gas barrier performance due to moisture absorption of the PVA resin (B) layer, it is preferable that the PVA resin (B) layer has a layer structure in which the biodegradable resin (C) layer is provided in a portion in contact with the outside air or water-containing contents.

The thickness of the laminate of the present invention is generally from 1 μm to 30,000 μm, and particularly, a range from 3 μm to 13,000 μm, and more particularly, a range from 10 μm to 3,000 μm is preferably used.

Further, as for the thickness of each layer constituting the laminate, the biodegradable resin (C) layer has a thickness of generally from 0.4 μm to 14,000 μm, preferably from 1 μm to 6000 μm, and particularly preferably from 4 μm to 1,400 μm. When the thickness of the biodegradable resin (C) layer is too large, the laminate tends to be stiff. On the other hand, when the thickness of the biodegradable resin (C) layer is too small, the laminate tends to be brittle.

In addition, the PVA resin (B) layer has a thickness of generally from 0.1 μm to 1,000 μm, preferably from 0.3 μm to 500 μm, and particularly preferably from 1 μm to 100 μm. When the thickness of the PVA resin (B) layer is too large, the laminate tends to be stiff and brittle. On the other hand, when the thickness of the PVA resin (B) layer is too small, the barrier properties tend to be decreased.

The biodegradable acid-modified polyester resin (A) layer (adhesive layer) has a thickness of generally from 0.1 μm to 500 μm, preferably from 0.15 μm to 250 μm, and particularly preferably from 0.5 μm to 50 μm. When the thickness of the biodegradable acid-modified polyester resin (A) layer is too large, the appearance is sometimes poor. On the other hand, when the thickness of the biodegradable acid-modified polyester resin (A) layer is too small, the adhesion strength tends to be decreased.

As for the ratio (the thickness of the biodegradable resin (C) layer/the thickness of the PVA resin (B) layer) of the thickness of the biodegradable resin (C) layer to the thickness of the PVA resin (B) layer, in the case where the number of layers of each type is more than one, the ratio of the sum of the thicknesses of the biodegradable resin (C) layers to the sum of the thicknesses of the PVA resin (B) layers is generally from 1 to 100, and preferably from 2.5 to 50. When the ratio is too large, the barrier properties tend to be decreased, and when the ratio is too small, the laminate tends to be stiff and brittle.

In addition, as for the ratio (the thickness of the biodegradable acid-modified polyester resin (A) layer (adhesive layer)/the thickness of laminate of the present invention) of the thickness of the biodegradable acid-modified polyester resin (A) layer to the thickness of the laminate of the present invention, in the case where the number of the biodegradable acid-modified polyester resin (A) layer (adhesive layer) is more than one, the ratio of the sum of the thicknesses of the biodegradable acid-modified polyester resin (A) layers to the thickness of the laminate of the present invention is generally from 0.005 to 0.5, and preferably from 0.01 to 0.3. When the ratio is too large, the appearance tends to be poor, and when the ratio is too small, the adhesion strength tends to be decreased.

The laminate of the present invention can be produced by a related known molding method, and specifically, a melt-molding method or a molding method in a solution state can be used.

For example, as the melt-molding method, a method in which a biodegradable acid-modified polyester resin (A) and a PVA resin (B) are sequentially or simultaneously laminated on a biodegradable resin (C) film or sheet by melt-extrusion, or a method in which a biodegradable acid-modified polyester resin (A) and a biodegradable resin (C) are sequentially or simultaneously laminated on a PVA resin (B) film or sheet by melt-extrusion, or a method in which a biodegradable resin (C), a biodegradable acid-modified polyester resin (A), and a PVA resin (B) are coextruded is adopted.

Further, as the molding method in a solution state, a method in which a solution obtained by dissolving a biodegradable acid-modified polyester resin (A) in a good solvent is solution coated on a biodegradable resin (C) film or sheet, followed by drying, and then, an aqueous solution of a PVA resin (B) is solution coated thereon, or the like can be adopted.

Above all, a melt-molding method is preferred from the viewpoint that the production can be achieved by one step and a laminate having excellent interlayer adhesiveness is obtained, and particularly, a coextrusion method is preferably used. Further, in the case of using such a melt-molding method, as the PVA resin (B), a resin having a 1,2-diol structural unit in its side chain is preferably used.

Specific examples of the coextrusion method include an inflation method, a T-die method, a multi-manifold die method, a feed block method, and a multi-slot die method. As for the shape of the die, a T-die, a circular die, or the like can be used.

The melt-molding temperature during melt-extrusion is in the range of generally from 190°C to 250°C, preferably from 200°C to 230°C.

The laminate of the present invention is preferably a laminate further subjected to a heat-stretching treatment, and by the stretching treatment, the improvement of the strength and the improvement of the gas barrier properties can be expected.

In particular, in the laminate of the present invention, when a PVA resin having a 1,2-diol structural unit in its side chain is used as the PVA resin (B), the stretchability is enhanced.
As the above-described stretching treatment or the like, a known stretching method can be adopted.
Specific examples thereof include a uniaxial stretching method and a biaxial stretching method, in which both ends of a multilayer structure sheet are held and the width of the sheet is increased; a molding method using a metal mold, in which a multilayer structure sheet is processed by stretching using a metal mold, such as a deep drawing molding method, a vacuum molding method, an air-pressure molding method, and a vacuum air-pressure molding method; and a method for processing a preformed multilayer structure body such as a parison using a tubular stretching method, a stretch blow method, or the like.
As the stretching method, in the case where a molded body in the form of a film or a sheet is desired to be formed, it is preferred to adopt a uniaxial stretching method or a biaxial stretching method.
Further, in the case of using a metal mold molding method such as a deep drawing molding method, a vacuum molding method, an air-pressure molding method, and a vacuum air-pressure molding method, it is preferred to uniformly heat the laminate using a hot-air oven or a heater oven, or using both in combination, or the like, and then, stretch the heated laminate using a chuck, a plug, a vacuum force, an air-pressure force, or the like.
In the case where a molded body having a drawing ratio (the depth (mm) of the molded product/the maximum diameter (mm) of the molded product) of generally from 0.1 to 3 such as a cup or a tray is desired to be formed, it is preferred to adopt a metal mold molding method, in which a stretching process is performed using a metal mold, such as a deep drawing molding method, a vacuum molding method, an air-pressure molding method, and a vacuum air-pressure molding method.
The laminate of the present invention thus obtained has strong adhesion strength, for example, between the biodegradable resin (C) layer and the biodegradable acid-modified polyester resin (A) layer, and between the PVA resin (B) layer and the biodegradable acid-modified polyester resin (A) layer.
In addition, the biodegradable acid-modified polyester resin (A), the biodegradable resin (C) and the PVA resin (B) are all biodegradable, and the laminate of the present invention having at least one biodegradable acid-modified polyester resin (A) layer is also excellent in biodegradability.
Since the laminate of the present invention is biodegradable, it can be suitably used for those that can be discarded as they are, such as coffee capsules (coffee bean containers for capsule coffee makers), shrink films, and other food and beverage containers.
Further, in a case where the laminate of the present invention has a PVA resin (B) layer, the PVA resin (B) layer can be dissolved in water and to be removed, and only the remaining water-insoluble resin can be recycled.

## EXAMPLES

Hereinafter, the present invention is explained with reference to Examples, however, the present invention is not limited to the description of the Examples as long as it does not depart from the gist of the present invention.
The terms "part(s)" and "%" in Examples are in terms of weight.

### [Example 1]

### [Preparation of Biodegradable Acid-modified Polyester Resin (A)]

As a biodegradable polyester resin (A') as a raw material, 100 parts of an adipic acid/1,4-butanediol polycondensate ("Ecoflex C1200" manufactured by BASF Corporation), 0.35 part of maleic anhydride, and as a radical initiator, 0.25 part of 2,5-dimethyl-2,5-bis(t-butyloxy)hexane ("Perhexa 25B" manufactured by NOF Corporation) were dry-blended, and then, the resulting mixture was melt-kneaded under the following conditions by a twin-screw extruder and extruded in the form of a strand, followed by cooling with water. Then, the strand was cut by a pelletizer, whereby a biodegradable acid-modified polyester resin (A) in a cylindrical pellet form was obtained.
[Twin-screw extruder]
Diameter (D): 15 mm
L/D: 60
Revolutions of screw: 200 rpm
Mesh: 90/90 mesh
Processing temperature: 210°C

[Measurement of Acid Value]

The acid value of the biodegradable acid-modified polyester resin (A) obtained above was measured by the acid value measurement method described above. Results are shown in Table 1.

[Preparation of PVA Resin (B)]

To a reactor vessel equipped with a reflux condenser, a dropping funnel, and a stirrer, 68.0 parts of vinyl acetate, 23.8 parts of methanol, and 8.2 parts of 3,4-diacetoxy-1-butene were charged, and then, azobisisobutyronitrile was added thereto at 0.3% by mole (with respect to the amount of the charged vinyl acetate). Then, the temperature was increased in a nitrogen gas stream while stirring to initiate polymerization. When the polymerization degree of vinyl acetate reached 90%, m-dinitrobenzene was added thereto to terminate the polymerization. Subsequently, by a method of blowing methanol vapor, the unreacted vinyl acetate monomer was removed from the system, whereby a methanol solution of a copolymer was obtained.

Then, the thus prepared methanol solution was further diluted with methanol to adjust the concentration to 45%, and charged in a kneader. While maintaining the temperature of the solution at 35°C, a methanol solution containing 2% sodium hydroxide was added thereto in an amount of 10.5 mmole with respect to 1 mole of the total amount of the vinyl acetate structural unit and the 3,4-diacetoxy-1-butene structural unit in the copolymer to carry out saponification. As the saponification proceeded, a saponified product was deposited, and when the form of the deposited saponified product was turned into a particle, the saponified product was separated by filtration, washed well with methanol, and dried in a hot-air dryer, whereby a desired PVA resin (B) having a 1,2-diol structural unit in its side chain was prepared.

The saponification degree of the obtained PVA resin (B) was analyzed based on an alkali consumption required for hydrolysis of remaining vinyl acetate and 3,4-diacetoxy-1-butene, and found to be 99.2% by mole.

Further, the average polymerization degree of the PVA resin (B) was analyzed according to JIS K 6726, and found to be 450.

Further, the content of the 1,2-diol structural unit represented by the general formula (4) was calculated based on an integrated value determined by $^{1}$H-NMR (300 MHz proton NMR, a d6-DMSO solution, internal standard substance: tetramethylsilane, 50°C), and found to be 6% by mole.

[Preparation of Laminate]

By using polylactic acid (C1) ("Ingeo 4032D" manufactured by NatureWorks LLC), a PVA resin (B), and a biodegradable acid-modified polyester resin (A), a laminate having a three-type five-layer structure of a polylactic acid (C1) layer/a biodegradable acid-modified polyester resin (A) layer/a PVA resin (B) layer/a biodegradable acid-modified polyester resin (A) layer/a polylactic acid (C1) layer was prepared by a three-type five-layer multilayer film forming apparatus provided with three extruders. The thickness of the obtained laminate was 120 μm, and the thicknesses of the respective layers were as follows: 50 μm/5 μm/10 μm/5 μm/50 μm.

The set temperatures of the respective extruders and the roll were as follows.

Set temperatures
(C1 to C4: respective cylinders, H: head, J: joint, FD1, 2: front dices, D1 to D3: dies)
Polylactic acid (C1): C1/C2/C3/C4/H/J=180/190/200/200/200/200°C
PVA resin (B): C1/C2/C3/C4/H/J=180/200/210/210/210/210°C
Biodegradable acid-modified polyester resin (A): C1/C2/H/J=180/200/210/210°C Die: FD1/FD2/D1/D2/D3=200/200/200/200/200°C
Roll: 60°C

[Appearance Evaluation of Laminate]

The laminate obtained above was observed visually and evaluated based on the following criteria. Results are shown in Table 1.

A: There was no portion where the thickness of each layer was non-uniform in the laminate and at the end of the laminate, and the transparency was high.
B: There was a portion where the thickness of each layer was non-uniform in the laminate and at the end of the laminate, and the laminate was partly cloudy.
C: There was a portion where the thickness of each layer was non-uniform in the laminate and at the end of the

laminate, and the laminate was totally cloudy.

[Evaluation of Adhesion Strength]

The laminate obtained above was cut into a strip having a width of 15 mm, and the adhesion strength at the layer interface was measured with a 50 N load cell of a tensile tester "AG-IS 5kN" (manufactured by Shimadzu Corporation).

The test speed was set to 100 mm/min, and the average value of 5 times was used as the value of adhesion strength. The measurement environment was 23°C/50% RH. Results are shown in Table 1.

[Example 2]

A laminate was prepared in the same manner as in Example 1 except that the amount of maleic anhydride was 0.40 part, unlike in the preparation of the biodegradable acid-modified polyester resin (A) of Example 1. The appearance and adhesiveness of the obtained laminate were evaluated in the same manner as in Example 1. Results are shown in Table 1.

[Example 3]

A laminate was prepared in the same manner as in Example 1 except that polylactic acid (C1) was changed to a mixture (C3) ("ECOVIO" manufactured by BASF) of polybutylene adipate terephthalate and polylactic acid, unlike in the preparation of the laminate of Example 1. The appearance and adhesiveness of the obtained laminate were evaluated in the same manner as in Example 1. Results are shown in Table 1.

[Comparative Example 1]

A laminate was prepared in the same manner as in Example 1 except that the amount of maleic anhydride was 0.50 part, unlike in the preparation of the biodegradable acid-modified polyester resin (A) of Example 1. The appearance and adhesiveness of the obtained laminate were evaluated in the same manner as in Example 1. Results are shown in Table 1.

[Comparative Example 2]

A laminate was prepared in the same manner as in Example 1 except that neither maleic anhydride nor radical initiator was blended, unlike in the preparation of the biodegradable acid-modified polyester resin (A) of Example 1. The appearance and adhesiveness of the obtained laminate were evaluated in the same manner as in Example 1. Results are shown in Table 1.

[Table 1]

| | Biodegradable acid-modified polyester resin (A) | | | Biodegradable resin (C) | Evaluation | |
|---|---|---|---|---|---|---|
| | Maleic anhydride (part) | Radical initiator (part) | Acid value (mg·KOH/g) | Type | Appearance | Adhesion Strength (N/mm$^2$) |
| Example 1 | 0.35 | 0.25 | 4.9 | Polylactic acid (C1) | A | 7 |
| Example 2 | 0.40 | 0.25 | 5.4 | Polylactic acid (C1) | B | 7 |
| Example 3 | 0.35 | 0.25 | 4.9 | Mixture (C3) of polylactic acid and polybutylene adipate terephthalate | A | >10 |
| Comparative Example 1 | 0.50 | 0.25 | 6.6 | Polylactic acid (C1) | C | 7 |
| Comparative Example 2 | 0 | 0 | 1.4 | Polylactic acid (C1) | A | <0.1 |

The laminates of Examples 1 to 3 using the biodegradable acid-modified polyester resin (A) of the present invention were excellent in both appearance and adhesiveness.

On the other hand, the laminate of Comparative Example 1 using a polyester resin having a high acid value was low in transparency and poor in appearance.

In addition, the laminate of Comparative Example 2 using a polyester resin having a low acid value was poor in adhesiveness.

Although the present invention has been described in detail with reference to specific embodiments, it is not limited to these. The present application is based on a Japanese Patent Application (Japanese Patent Application No. 2017-172065, WO 2019/049798 A1) filed on September 7, 2017.

INDUSTRIAL APPLICABILITY

The biodegradable acid-modified polyester resin (A) of the present invention can be suitably used as an adhesive layer between the PVA resin (B) layer and the biodegradable resin (C) layer. Since the obtained laminate is biodegradable, it can be suitably used for those that can be discarded as they are, such as coffee capsules (coffee bean containers for capsule coffee makers), shrink films, and other food and beverage containers.

## Claims

1. A biodegradable acid-modified polyester resin, having an acid value of 2.0 mg·KOH/g to 6.5 mg·KOH/g, and comprising at least one structural unit selected from the structural units represented by the following general formulae (1) to (3):

[Chem. 1]

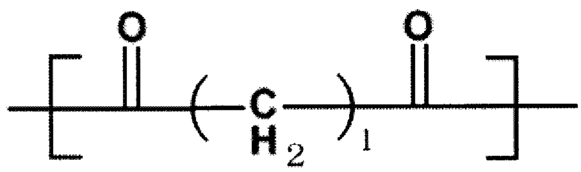

(1)

wherein l is an integer of 2 to 6,

[Chem. 2]

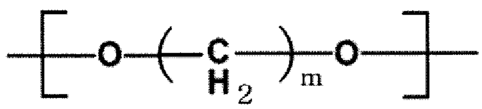

(2)

wherein m is an integer of 2 to 6, and

[Chem. 3]

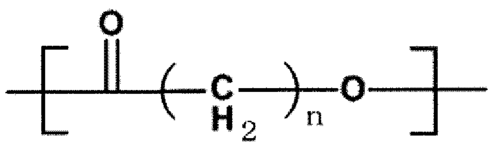

(3)

wherein n is an integer of 2 to 6,
and wherein the biodegradable acid-modified polyester resin satisfies the conditions for biodegradability as defined in ISO 14851:1999.

2. The biodegradable acid-modified polyester resin according to claim 1, wherein the biodegradable acid-modified polyester resin is formed by graft polymerization of an $\alpha,\beta$-unsaturated carboxylic acid or an anhydride thereof to a biodegradable polyester resin.

3. The biodegradable acid-modified polyester resin according to claim 1, comprising at least one structural unit selected from the structural units represented by the above general formulae (1) to (3) in a total amount of 50% by mole or more.

4. A laminate comprising at least one layer containing the biodegradable acid-modified polyester resin according to any one of claims 1 to 3.

5. A laminate comprising: a polyvinyl alcohol resin (B) layer; a biodegradable resin (C) layer; and an adhesive layer between the above two layers,
wherein the adhesive layer contains the biodegradable acid-modified polyester resin according to any one of claims 1 to 3.

**Patentansprüche**

1. Biologisch abbaubares, säuremodifiziertes Polyesterharz mit einer Säurezahl von 2,0 mg KOH/g bis 6,5 mg·KOH/g, das mindestens eine Struktureinheit enthält, die aus den durch die folgenden allgemeinen Formeln (1) bis (3) dargestellten Struktureinheiten ausgewählt ist:

[Chem. 1]

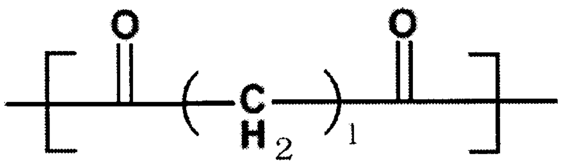

(1)

worin l eine ganze Zahl von 2 bis 6 ist,

[Chem. 2]

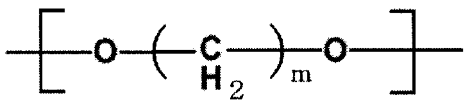

(2)

worin m eine ganze Zahl von 2 bis 6 ist, und

[Chem. 3]

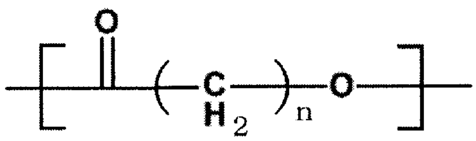

(3)

worin n eine ganze Zahl von 2 bis 6 ist,
und wobei das biologisch abbaubare, säuremodifizierte Polyesterharz die Bedingungen für die biologische Abbaubarkeit, wie in ISO 14851: 1999 definiert, erfüllt.

2. Biologisch abbaubares, säuremodifiziertes Polyesterharz nach Anspruch 1, wobei das biologisch abbaubare, säuremodifizierte Polyesterharz durch Pfropfpolymerisation einer α,β-ungesättigten Carbonsäure oder eines Anhydrids davon auf ein biologisch abbaubares Polyesterharz gebildet wird.

**3.** Biologisch abbaubares, säuremodifiziertes Polyesterharz nach Anspruch 1, umfassend mindestens eine Struktureinheit, ausgewählt aus den durch die obigen allgemeinen Formeln (1) bis (3) dargestellten Struktureinheiten, in einer Gesamtmenge von 50 Mol-% oder mehr.

**4.** Laminat, umfassend mindestens eine Schicht, die das biologisch abbaubare, säuremodifizierte Polyesterharz nach einem der Ansprüche 1 bis 3 enthält.

**5.** Laminat, umfassend: eine Schicht aus Polyvinylalkoholharz (B); eine Schicht aus biologisch abbaubarem Harz (C); und eine Klebemittelschicht zwischen den beiden vorgenannten Schichten,
wobei die Klebemittelschicht das biologisch abbaubare, säuremodifizierte Polyesterharz nach einem der Ansprüche 1 bis 3 enthält.

## Revendications

**1.** Résine polyester biodégradable modifiée par un acide, ayant un indice d'acidité de 2,0 mg-KOH/g à 6,5 mg-KOH/g, et comprenant au moins une unité structurelle choisie parmi les unités structurelles représentées par les formules générales suivantes (1) à (3) :

[Chem. 1]

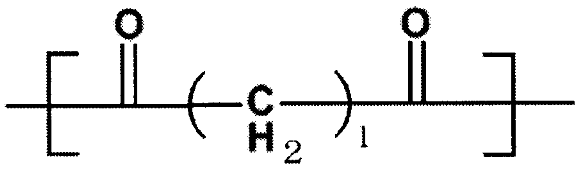

(1)

dans laquelle l est un nombre entier de 2 à 6,

[Chem. 2]

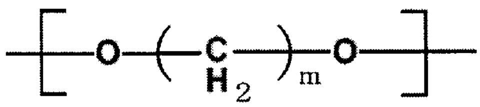

(2)

dans laquelle m est un nombre entier de 2 à 6, et

[Chem. 3]

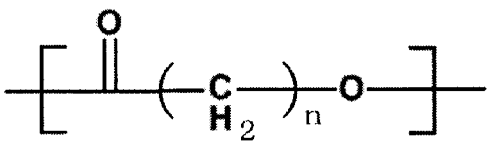

(3)

dans laquelle n est un nombre entier de 2 à 6,
et dans laquelle la résine polyester biodégradable modifiée par un acide satisfait aux conditions de biodégradabilité définies dans la norme ISO 14851:1999.

**2.** La résine polyester biodégradable modifiée par un acide selon la revendication 1, dans laquelle la résine polyester

biodégradable modifiée par un acide est formée par polymérisation par greffage d'un acide carboxylique α,β-insaturé ou d'un de ses anhydrides sur une résine polyester biodégradable.

**3.** La résine polyester biodégradable modifiée par un acide selon la revendication 1, comprenant au moins une unité structurale choisie parmi les unités structurales représentées par les formules générales ci-dessus (1) à (3) dans une quantité totale de 50 % en mole ou plus.

**4.** Stratifié comprenant au moins une couche contenant la résine polyester biodégradable modifiée par un acide selon l'une des revendications 1 à 3.

**5.** Stratifié comprenant : une couche de résine d'alcool polyvinylique (B) ; une couche de résine biodégradable (C) ; et une couche adhésive entre les deux couches susmentionnées,
dans lequel la couche adhésive contient la résine polyester biodégradable modifiée par un acide selon l'une des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000177072 A
- JP 2009196287 A
- JP 2013212682 A
- EP 2781351 A1
- JP 2014098111 A
- EP 0263499 A2
- JP 2015143356 A
- JP 2017172065 A
- WO 2019049798 A1